# EUROPÄISCHE PATENTSCHRIFT

(11) **EP 3 486 419 B1**
(45) Veröffentlichungstag und Bekanntmachung des Hinweises auf die Patenterteilung: **17.06.2020**
(21) Anmeldenummer: 18204363.8
(22) Anmeldetag: 05.11.2018
(51) Int. Cl.: E05F 11/38, E05F 11/48, E05F 7/04

(54) **MITNEHMER UND FAHRZEUGFENSTERHEBER**
CARRIER AND VEHICLE WINDOW RAISER
ENTRAÎNEUR ET LÈVE-GLACE DE VÉHICULE

(30) Priorität: 17.11.2017 DE 102017220617
(43) Veröffentlichungstag der Anmeldung: 22.05.2019
(73) Patentinhaber: Brose Fahrzeugteile SE & Co. Kommanditgesellschaft, Bamberg, 96052 Bamberg (DE)
(72) Erfinder: BONK, Andy, 96472 Rödental (DE); VÖLKER, Stephan, 96450 Coburg (DE); TAUBMANN, Udo, 96476 Bad Rodach - Sülzfeld (DE); STARKLAUF, Thomas, 91330 Eggolsheim (DE); AMFT, Marcel, 96175 Pettstadt (DE)
(74) Vertreter: Maikowski & Ninnemann Patentanwälte Partnerschaft mbB

(56) Entgegenhaltungen:
- DE-A1- 10 220 948
- DE-U1- 20 202 352
- DE-U1-202006 013 425
- US-A1- 2017 292 312

## Beschreibung

Die Erfindung betrifft einen Mitnehmer für einen Fahrzeugfensterheber sowie einen Fahrzeugfensterheber mit einem Mitnehmer für die Verstellung einer Fensterscheibe.

Fahrzeugfensterheber, die für die Verstellung einer Fensterscheibe mit einem flexiblen Zugmittel für die Übertragung einer Verstellkraft und mindestens einem mit der Fensterscheibe zu verbindenden und mittels des Zugmittels verstellbaren Mitnehmer ausgestattet sind, sind weithin bekannt. Der Mitnehmer ist hierbei beispielsweise an einer Führungsschiene verschieblich geführt, die an einem Trägerbauteil befestigt oder hieran integral ausgeformt ist. Es ist in diesem Zusammenhang auch bekannt, einen Mitnehmer, der gegebenenfalls auch als Gleiter bezeichnet wird, mit einer Führung für die Umlenkung des flexiblen Zugmittels des Fahrzeugfensterhebers auszugestalten, um eine maximale Hebelänge des Fahrzeugfensterhebers zu vergrößern. Hierbei wird dann zum Beispiel das flexible Zugmittel an dem Mitnehmer um mehr als 45°, zum Beispiel um 90°, umgelenkt. Das flexible Zugmittel, zum Beispiel in Form eines Seiles, das mit dem Mitnehmer verbunden ist, um diesen entlang zweier zueinander entgegengesetzter Verstellrichtungen verstellen zu können, ist somit in solchen Fahrzeugfensterheber an dem Mitnehmer zur Erhöhung der maximalen Hebelänge des Fahrzeugfensterhebers und damit zur Vergrößerung des möglichen Hubes für die zu verstellende Fensterscheibe an einer hierfür vorgesehenen Führung des Mitnehmers umgelenkt, beispielsweise um etwa 90°.

DE 20 2006 013425 U1, DE 102 20 948 A1, US 2017/292312 A1 und DE 202 02 352 U1 offenbaren einen Mitnehmer für einen Fahrzeugfensterheber mit einer Führung für die Umlenkung eines Zugmittels des Fahrzeugfensterhebers.

Eine solche Führung des Mitnehmers bildet dann eine Führungsfläche aus, an der bei bestimmungsgemäßer Montage des Fahrzeugfensterhebers das Zugmittel (reibend) anliegt. Im Betrieb des Fahrzeugfensterhebers können durch die treibende Anlage des Zugmittels an der das Zugmittel umlenkenden Führungsfläche des Mitnehmers unerwünschte Reib- oder Schleifgeräusche entstehen. Zur Vermeidung derartiger störender Geräusche ist es aus der Praxis bereits bekannt, eine Führung des Mitnehmers für das flexible Zugmittel zu schmieren, z.B. zu fetten.

Es hat sich nun gezeigt, dass die bisher bekannten Maßnahmen zur Vermeidung von störenden Reib- oder Schleifgeräuschen allenfalls bedingt eine dauerhafte Verbesserung darstellen. Auch bei an der Führung geschmierten Mitnehmern bilden sich im Dauerbetrieb des Fahrzeugfensterhebers unter Umständen Reibflächen zwischen dem Zugmittel und der Führungsfläche des Mitnehmers aus, die weiterhin störende Reib- oder Schleifgeräusche mit sich bringen. So gelangen häufig Schmutz- oder Staubpartikel und/oder durch Abrieb entstehende Partikel in die Führung für das flexible Zugmittel. In Kombination mit etwaigen zur Reduzierung der Reibung vorgesehenen Ölen oder Fetten vermengen sich derartige Partikel zu einer Art Reibpaste innerhalb der Führung. Hierdurch entstehen dann - aufgrund der Relativbewegung des flexiblen Zugmittels bezüglich der Führung des Mitnehmers, über die das flexible Zugmittel an dem Mitnehmer umgelenkt ist - im Betrieb des Fahrzeugfensterhebers ebenfalls unerwünschte Reib- oder Schleifgeräusche.

Es besteht damit Bedarf an einer Lösung, die die vorstehend dargestellten Nachteile überwindet oder zumindest reduziert.

Dies ist sowohl mit einem Mitnehmer nach Anspruch 1 als auch mit einem Fahrzeugfensterheber nach Anspruch 14 erreicht.

Ein erfindungsgemäßer Mitnehmer für einen Fahrzeugfensterheber, der mit einer mittels des Fahrzeugfensterhebers zu verstellenden Fensterscheibe zu verbinden ist (also für die Verbindung mit einer solchen Fensterscheibe eingerichtet und vorgesehen ist) und der eine Führung für die Umlenkung eines Zugmittels des Fahrzeugfensterhebers aufweist, bildet an der Führung für das Zugmittel eine Führungsfläche aus, an der bei bestimmungsgemäßer Montage des Fahrzeugfensterhebers das Zugmittel anliegt. Das Zugmittel gleitet ich hier somit mit zumindest einem Abschnitt an der Führungsfläche des Mitnehmers entlang, wenn die Fensterscheibe mittels des Mitnehmers verstellt wird. Hierbei ist nun vorgesehen, dass an der Führungsfläche mindestens eine Aussparung zum Abführen von Partikeln aus der für das Zugmittel vorgesehenen Führung des Mitnehmers ausgebildet ist. Über die mindestens eine Aussparung an der Führungsfläche (in einem Bereich, an dem das Zugmittel im Betrieb des Fahrzeugfensterhebers anliegt) können somit Partikel, die beispielsweise durch Abrieb oder Einwirkung von außen (z.B. durch Staub, Schmutz, Salz, Wasser, Reinigungsmittel, etc.) in die Führung des Mitnehmers gelangen, wieder aus der Führung abgeführt werden. Etwaige Partikel können durch das sich im Betrieb des Fahrzeugfensterhebers zur Verstellung der Fensterscheibe bewegende Zugmittel selbsttätig zu der mindestens einen Aussparung gefördert und hierüber aus der Führung abgeführt werden. Über die mindestens eine Aussparung ist somit eine Ansammlung von Partikeln an der Führungsfläche des Mitnehmers verhindert.

Wie eingangs bereits erläutert kann das flexible Zugmittel an dem Mitnehmer um mehr als 45°, zum Beispiel um 90°, umgelenkt werden. Das flexible Zugmittel, zum Beispiel in Form eines Seiles, das mit dem Mitnehmer verbunden ist, um diesen entlang zweier zueinander entgegengesetzter Verstellrichtungen verstellen zu können, ist somit an dem Mitnehmer zur Vergrößerung des möglichen Hubes für die zu verstellende Fensterscheibe an einer hierfür vorgesehenen Führung des Mitnehmers umgelenkt, beispielsweise um etwa 90°.

Die mindestens eine Aussparung kann beispielsweise eine Vertiefung in der Führungsfläche ausbilden. Dies schließt beispielsweise ein, dass ein gegenüber der Führungsfläche für das Zugmittel zurückgesetzter Bereich vorgesehen ist, in dem störende Partikel aufgenommen werden können, sodass sich diese nicht an der Führungsfläche selbst ansammeln können.

Alternativ oder ergänzend kann die mindestens eine Aussparung eine Durchgangsöffnung ausbilden. Dies schließt somit beispielsweise ein, dass an der Führungsfläche mindestens eine Durchgangsöffnung zum Abführen von Partikeln aus der für das Zugmittel vorgesehenen Führung des Mitnehmers ausgebildet ist. Über eine entsprechende Durchgangsöffnung können somit Partikel im Betrieb des Fahrzeugfensterhebers aus der Führung in einfacher Weise dauerhaft aus der Führung entfernt werden.

Die mindestens eine Aussparung kann beispielsweise als ein einfaches Loch, insbesondere ein Bohr- oder Perforationsloch, an der Führungsfläche des Mitnehmers ausgebildet sein.

In einer Ausführungsvariante ist die mindestens eine Aussparung längserstreckt ausgebildet. Dies schließt beispielsweise ein, dass die Aussparung an der Führungsfläche kanalartig oder schlitzartig verläuft. Eine Längsachse der mindestens einen längserstreckten Aussparung kann hier dann beispielsweise parallel, schräg oder quer zu einer Längserstreckungsrichtung der Führung verlaufen.

In einer Ausführungsvariante weist die mindestens eine Aussparung einen kreisförmigen oder ellipsenförmigen Querschnitt auf. Hier ist die Aussparung beispielsweise als kreiszylindrische Durchgangsöffnung an der Führungsfläche ausgebildet.

In einer Ausführungsvariante weist die Aussparung einen ersten Abschnitt und mindestens einen zweiten Abschnitt auf, wobei sich der mindestens eine zweite Abschnitt an den ersten Abschnitt in einer Richtung anschließt und sich der zweite Abschnitt entlang genau dieser Richtung aufweitet. Dies schließt beispielsweise eine Ausführungsvariante ein, bei der die Aussparung längserstreckt ausgestaltet ist, im Wesentlichen quer zu einer Längserstreckungsrichtung der Führung verläuft und sich nach außen hin (oder auch nach innen) aufweitet. Eine entsprechende Aufweitung und damit lokale Vergrößerung der Aussparung kann hierbei insbesondere eine im Betrieb des Fahrzeugfensterhebers zu erwartende Häufung von Partikeln in bestimmten Bereichen der Führung berücksichtigen.

In einer Ausführungsvariante verläuft die mindestens eine Aussparung an der Führungsfläche S-förmig. Er sei in dieser Stelle ausdrücklich darauf hingewiesen, dass ein S-förmiger Verlauf der mindestens einen Aussparung nicht ausschließt, dass die Aussparung mindestens einen sich aufweitenden Abschnitt für die Abführung von Partikeln umfasst.

In einer Ausführungsvariante sind mehrere entlang einer Längserstreckungsrichtung der Führung aufeinanderfolgende Aussparungen an der Führungsfläche ausgebildet. Das Vorsehen mehrerer Aussparungen an der Führungsfläche der für die Umlenkung des Zugmittels vorgesehenen Führung des Mitnehmers erleichtert das Abführen auch größerer Mengen von Partikeln im Betrieb eines mit dem Mitnehmer ausgestatteten Fahrzeugfensterhebers.

Die einzelnen aufeinanderfolgenden Aussparungen können selbstverständlich entsprechend den vorstehend erläuterten Ausführungsvarianten ausgestaltet und hierbei auch unterschiedlich miteinander kombiniert sein. So können insbesondere Kombinationen mit Vertiefungen und Durchgangsöffnungen und/oder mit sich unterschiedlich bezüglich der Längserstreckungsrichtung der Führung erstreckenden Aussparungen vorgesehen sein.

Beispielsweise kann mindestens eine sich parallel zur Längserstreckungsrichtung der Führung verlaufende Aussparung mit mehreren schräg zu der Längserstreckungsrichtung verlaufenden Aussparungen kombiniert sein. In einer hierauf basierenden Weiterbildung verläuft beispielsweise eine zentrale, parallel zur Längserstreckungsrichtung der Führung verlaufende Aussparung mittig zwischen zwei Reihen von jeweils schräg zur Längserstreckungsrichtung orientierten Aussparungen.

In einer Ausführungsvariante ist beispielsweise vorgesehen, dass mindestens zwei der mehreren entlang der Längserstreckungsrichtung der Führung aufeinanderfolgenden Aussparungen verschiedene Querschnittsformen aufweisen.

Alternativ oder ergänzend können die mehreren entlang der Längserstreckungsrichtung der Führung aufeinanderfolgende Aussparungen äquidistant zueinander beabstandet sein oder mit zueinander unterschiedlichen Abständen vorgesehen sein.

In einer Ausführungsvariante können mindestens zwei der mehreren entlang der Längserstreckungsrichtung der Führung aufeinanderfolgenden Aussparungen (auch) quer zur Längserstreckungsrichtung zueinander versetzt sein.

Es können somit insbesondere unterschiedliche Anordnungen von Aussparungen, insbesondere in Form von Durchgangsöffnungen, an der Führungsfläche des Mitnehmers ausgebildet sein, um eine Abführung von Partikeln aus der Führung zu unterstützen. Grundsätzlich kann die Führung an dem Mitnehmer beispielsweise als Führungskanal ausgestaltet sein, bei dem die Führungsfläche für das (flexible) Zugmittel, zum Beispiel ein Seil, durch eine innere Mantelfläche dieses Führungskanals gebildet ist.

Ein weiterer Aspekt der vorgeschlagenen Lösung betrifft einen Fahrzeugfensterheber für die Verstellung einer Fensterscheibe.

Ein solcher Fahrzeugfensterheber umfasst ein flexibles Zugmittel für die Übertragung einer Verstellkraft zur Verstellung der Fensterscheibe, mindestens einen mit der Fensterscheibe zu verbindenden Mitnehmer sowie mindestens eine Führungsschiene, an der der mindestens eine Mitnehmer verschieblich geführt ist. Der Mitnehmer weist hierbei eine Führung für die Umlenkung des flexiblen Zugmittels an dem Mitnehmer auf, wobei die Führung eine Führungsfläche ausbildet, an der das flexible Zugmittel anliegt. An der Führungsfläche ist nun ferner mindestens eine Aussparung zum Abführen von Partikeln aus der für das flexible Zugmittel vorgesehenen Führung des Mitnehmers ausgebildet.

Eine für die Umlenkung des Zugmittels an dem Mitnehmer, zum Beispiel für eine Umlenkung im Bereich von 90°, vorgesehene Führung, integriert hier somit mindestens eine Aussparung, über die ansonsten beim Betrieb des Fahrzeugfensterhebers zu Reib- oder Schleifgeräusche führende Partikel aus der Führung abgeführt werden können. Ein entsprechender Fahrzeugfensterheber kann somit einen Mitnehmer entsprechend den vorstehend erläuterten Ausführungsvarianten aufweisen. Dementsprechend gelten für einen solchen Mitnehmer vorstehend und nachstehend erläuterte Vorteile und Merkmale auch für Ausführungsvarianten eines entsprechenden Fahrzeugfensterhebers und umgekehrt.

Die beigefügten Figuren veranschaulichen exemplarisch mögliche Ausführungsvarianten der vorgeschlagenen Lösung.

Hierbei zeigen:
- Figur 1: im Querschnitt und ausschnittsweise ein Ausführungsbeispiel eines Mitnehmers mit Blick auf eine kanalförmige (Seil-) Führung und eine an einer Führungsfläche dieser Führung ausgebildete Aussparung in Form einer Durchgangsöffnung zum Abführen von Partikeln;
- Figur 2: ausschnittsweise den Mitnehmer der Figur 1 im Längsschnitt unter Veranschaulichung mehrerer aufeinanderfolgender Durchgangsöffnungen entlang einer Längserstreckungsrichtung der Führung und eines darin um 90° umgelenkten Seils;
- Figuren 3A bis 3I: ausschnittsweise und jeweils in Draufsicht weitere Varianten für die mit mindestens einer Aussparung versehene Führungsfläche des Mitnehmers;
- Figur 3J bis 3K: ausschnittsweise und jeweils im Längsschnitt weitere Varianten für an der Führungsfläche ausgebildete Aussparungen;
- Figur 4: in Seitenansicht ein Fahrzeugfensterheber mit zwei jeweils an einer Führungsschiene verschieblich gelagerten Mitnehmern;
- Figur 5: in perspektivischer Ansicht ein aus dem Stand der Technik bekannter Mitnehmer;
- Figur 6: ausschnittsweise und in entsprechend der Figur 1 geschnittener Ansicht eine an einem Mitnehmer ausgebildete Führung gemäß dem Stand der Technik;
- Figur 7: in mit der Figur 2 übereinstimmender Ansicht ausschnittsweise der Mitnehmer der Figur 6.

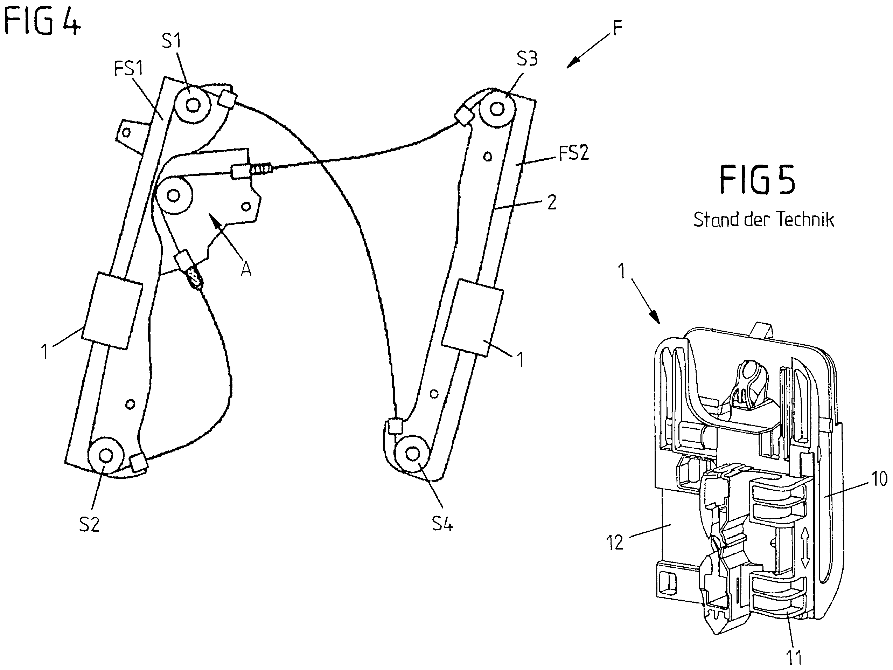

Die Figur 4 zeigt in Seitenansicht einen üblichen Aufbau eines Fahrzeugfensterhebers F für die Verstellung einer hier nicht dargestellten Fensterscheibe in einem Fahrzeug. Der Fahrzeugfensterheber F weist hier zwei im Wesentlichen parallel zueinander orientierte Führungsschienen FS1 und FS2 auf. An diesen Führungsschienen FS1 und FS2 ist jeweils ein Mitnehmer 1 verschieblich gelagert. Jeder Mitnehmer 1 ist mit einem Seil 2 des Fahrzeugfensterhebers F verbunden, das über mehrere Umlenkelemente in Form von Seilrollen S1 bis S4 umgelenkt ist. Die Seilrollen S1 bis S4 sind hierbei jeweils an einem oberen und unteren Ende der Führungsschienen FS1 und FS2 drehbar gelagert.

Das Seil 2 steht ferner mit einer Antriebseinheit A des Fahrzeugfensterhebers F in Verbindung. Diese Antriebseinheit A umfasst üblicherweise einen Antriebsmotor und eine hiervon angetriebene Seiltrommel, an der ein Abschnitt des Seiles 2 aufgewickelt und abgewickelt werden kann, um mittels des Seiles 2 eine Verstellkraft an die Mitnehmer 1 zum Anheben oder Absenken der Fensterscheibe zu übertragen. Je nach Drehrichtung des Antriebsmotors der Antriebseinheit A werden die beiden Mitnehmer 1 entlang der Führungsschienen FS1 und FS2 synchron in eine von zwei möglichen zueinander entgegengesetzten Verstellrichtungen verstellt, sodass hierüber die mit beiden Mitnehmern 1 verbundene Fensterscheibe angehoben oder abgesenkt werden kann.

Anhand der Figur 5 ist exemplarisch ein aus dem Stand der Technik bekannter Mitnehmer 1 in perspektivischer Ansicht näher veranschaulicht. Der Mitnehmer 1 umfasst unter anderem einen Scheibenbefestigungsabschnitt 10, über den der Mitnehmer 1 an einer Scheibenunterkante der Fensterscheibe fixiert werden kann. Ferner umfasst der Mitnehmer 1 einen Führungsabschnitt 11. Über diesen Führungsabschnitt 11 kann ein Abschnitt an der jeweiligen Führungsschiene FS1, FS2 umgriffen werden, sodass der Mitnehmer 1 an der jeweiligen Führungsschiene FS1 oder FS2 verschieblich gehalten ist. Weiterhin umfasst der Mitnehmer 1 einen Grundkörper 12. An diesem Grundkörper 12 können der Scheibenbefestigungsabschnitt 10 und der Führungsabschnitt 11 ausgeformt oder befestigt sein. Ferner ist an dem Grundkörper 12 eine Verbindungsstelle für die Anbindung des Seiles 2 an den Mitnehmer 1 ausgebildet. Eine entsprechende Verbindungsstelle wird beispielsweise durch mindestens eine Nippelkammer ausgebildet, an der ein Seilnippel des Seiles 2 eingehängt werden kann.

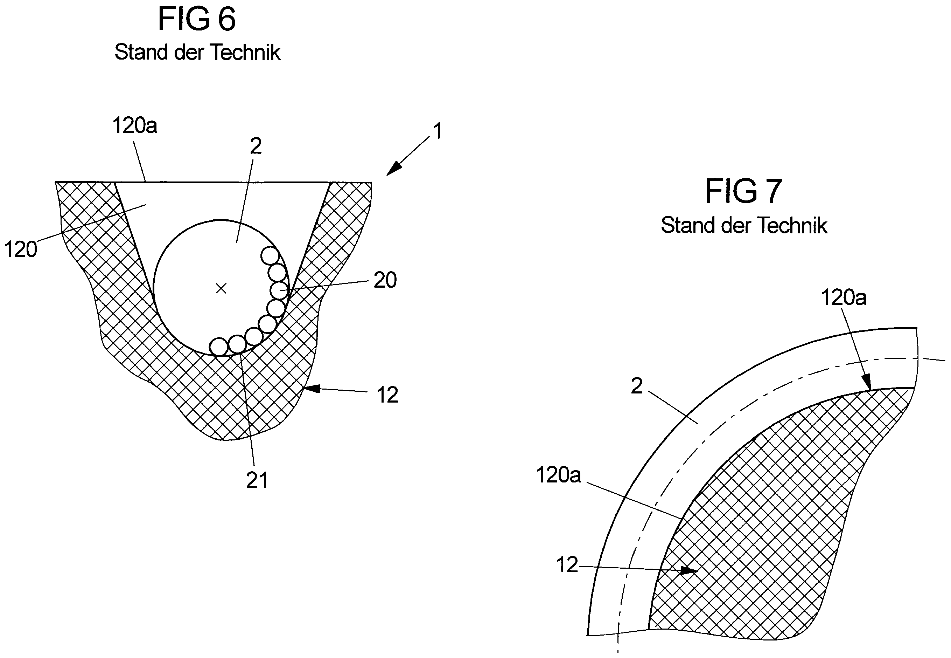

Aus dem Stand der Technik ist nun ferner bekannt, dass an einem Grundkörper 12 eines Mitnehmers 1 eine Führung für die Umlenkung eines flexiblen Zugmittels, wie zum Beispiel des Seiles 2, ausgebildet sein kann, um den maximal möglichen Hub der Fensterscheibe zu erhöhen. Typischerweise wird hierbei ein Seil 2 im Bereich von 90° an dem Mitnehmer 1 umgelenkt. Ein entsprechender aus dem Stand der Technik bekannter Mitnehmer 1 ist dabei ausschnittsweise im Quer- und Längsschnitt in den Figuren 6 und 7 dargestellt.

Das Seil 2 ist hierbei in einer kanalförmigen Seilführung 120 des Grundkörpers 12 des Mitnehmers 1 geführt. Das Seil 2 liegt folglich in diesem Bereich an einer Mantel- oder Führungsfläche 120a der als Seilkanal ausgestalteten Seilführung 120 an. Im Betrieb des Fahrzeugfensterhebers F kommt es zu einer Relativbewegung zwischen dem Seil 2 und der Führungsfläche 120a, an der entlang das Seil 2 an dem Mitnehmer 1 umgelenkt ist. Durch die Reibpaarung zwischen Seil 2 und Führungsfläche 120a kann es somit zu störenden Reib- oder Schleifgeräuschen kommen.

Zur Vermeidung derartiger störender Geräusche ist es bereits bekannt, die Führung 120 an dem Mitnehmer 1 zu schmieren, z.B. zu fetten. Ein entsprechender Schmierstoff gelangt dann beispielsweise in Zwischenräume 210, die zwischen Drahtlitzen 20 des Seiles 2 vorhanden sind. Im Betrieb des Fahrzeugfensterhebers F kann es jedoch dazu kommen, dass von außen oder durch Abrieb Partikel, insbesondere Staub- oder Schmutzpartikel, in die Führung 120 und insbesondere zwischen das Seil 2 und die Führungsfläche 120a gelangen. Diese Partikel bilden dann mit dem Schmierstoff eine Reibpaste, die im Betrieb ebenso zu störenden Reib- oder Schleifgeräuschen führt.

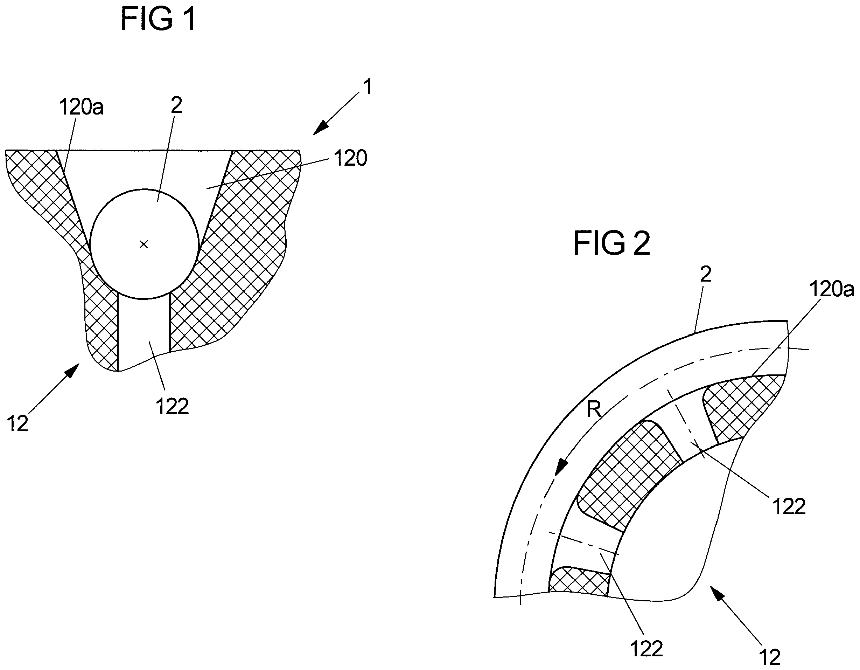

Hier kann die vorgeschlagene Lösung Abhilfe schaffen, zu der mögliche Ausführungsvarianten in den Figuren 1 bis 3K dargestellt sind.

Hierbei ist an der Führungsfläche 120a des Mitnehmers 1 mindestens eine Aussparung 122 ausgebildet, über die Partikel aus der für das Seil 2 vorgesehenen Führung 120 abgeführt werden können. Über die mindestens eine Aussparung 122 können somit eventuell in die Führung 120 gelangte Partikel (durch Bewegung des Seiles 2 in der Führung 120 selbsttätig) entfernt werden.

In den Figuren 1 und 2 ist beispielsweise in mit den Figuren 6 und 7 übereinstimmenden Ansichten ausschnittsweise ein Mitnehmer 1 dargestellt, bei dem entlang einer Längserstreckungsrichtung L der Führung 120, die der Erstreckungsrichtung des an dem Mitnehmer 1 umgelenkten Seil 2 entspricht, mehrere (mindestens zwei) aufeinanderfolgende und jeweils als Durchgangsöffnungen ausgestaltete Aussparungen 122 an der Führungsfläche 120a ausgebildet sind. Über diese Durchgangsöffnungen oder -löcher der Aussparungen 122 können Partikel aus der Seilführung 120 abgeführt werden. Die Aussparungen 122 erstrecken sich hierbei im Wesentlichen senkrecht zur Längserstreckungsrichtung L der Seilführung 120. Beispielsweise sind die einzelnen Aussparungen 122 durch Perforationen an dem Grundkörper 12 des Mitnehmers 1 ausgebildet.

Indem etwaige in der Führung 120 vorhandene Partikel über die Aussparungen 122 aus der Führung 120 heraus gelangen können, ist deren Ansammlung an der Führungsfläche 120a verhindert. Es kann folglich auch zu keiner Vermengung dieser Partikel mit etwaigen Flüssigkeiten, Ölen oder Fetten innerhalb der Führung 120 kommen. Eine für die Entstehung von Reib- oder Schleifgeräuschen nachteilige Reifpaste kann somit nicht entstehen.

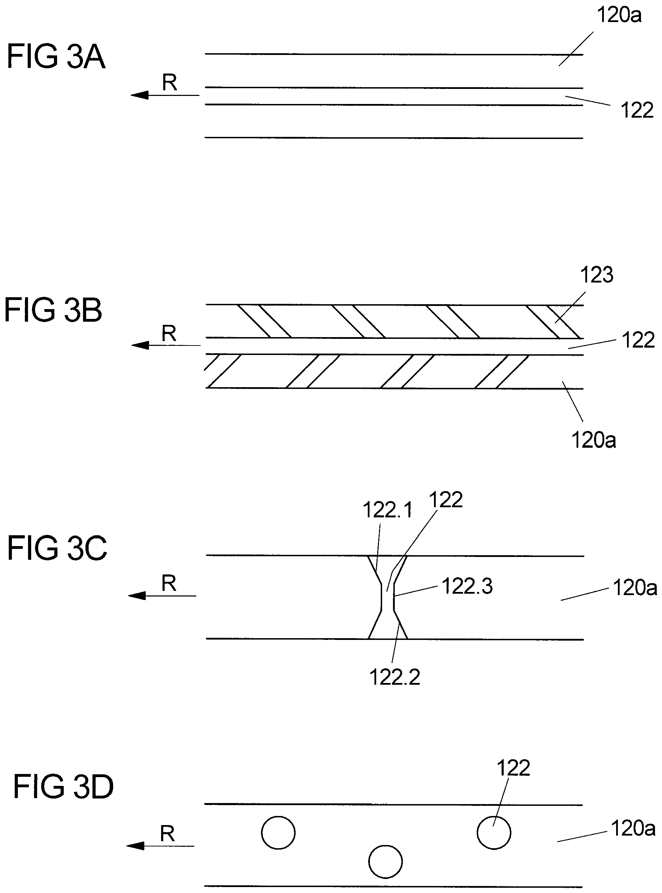

Anstelle von einzelnen lokalen Aussparungen 122 in Form von Durchgangsöffnungen oder Durchgangslöchern kann beispielsweise auch entsprechend der Draufsicht der Figur 3A eine mittig am Boden der Seilführung 120 verlaufende, längserstreckte kanalartige oder schlitzartige Aussparung 122 vorgesehen sein, um Partikel aus der Seilführung 120 abzuführen. Diese längserstreckte kanalartige oder schlitzartige Aussparung 122 verläuft hier z.B. parallel zur Längserstreckungsrichtung R der Seilführung 120.

Auch können geometrisch unterschiedlich ausgestaltete Aussparungen 122 und 123 miteinander kombiniert sein. Bei der Ausführungsvariante der Figur 3B ist beispielsweise die kanalartige Aussparung 122 der Figur 3A mit schräg zur Längserstreckungsrichtung R verlaufenden und zueinander spiegelsymmetrischen Aussparungen 123 kombiniert. Die beiderseits der mittig verlaufenden, kanalartigen Aussparung 122 angeordneten schräg verlaufenden Aussparungen 123 erstrecken sich somit seitlich des Seiles 2, wenn dieses an dem Mitnehmer 1 bestimmungsgemäß umgelenkt ist, und laufen aufeinander zu.

Eine Aussparung 122 an der Führungsfläche 120a entsprechend der Ausführungsvariante der Figur 3C verläuft demgegenüber im Wesentlichen quer zur Längserstreckungsrichtung R. Die Aussparung 122 der Figur 3C weist hierbei einen mittigen Abschnitt 122.3 auf, an den sich beiderseits jeweils ein weiterer Abschnitt 122.1, 122.2 nach außen hin anschließt. Diese (Rand-) Abschnitte 122.1 und 122.2 weiten sich dabei nach außen hin auf und gestatten somit den Austritt größerer Partikel sowie größerer Mengen an Partikeln in einem randseitigen Bereich der Führung 120.

Bei der Ausführungsvariante der Figur 3D sind mehrere entlang der Längserstreckungsrichtung R hintereinander angeordnete Aussparungen 122 mit jeweils kreisförmigem Querschnitt vorgesehen. Unmittelbar aufeinanderfolgende Aussparungen 122 sind hierbei zusätzlich quer zur Längserstreckungsrichtung R zueinander versetzt.

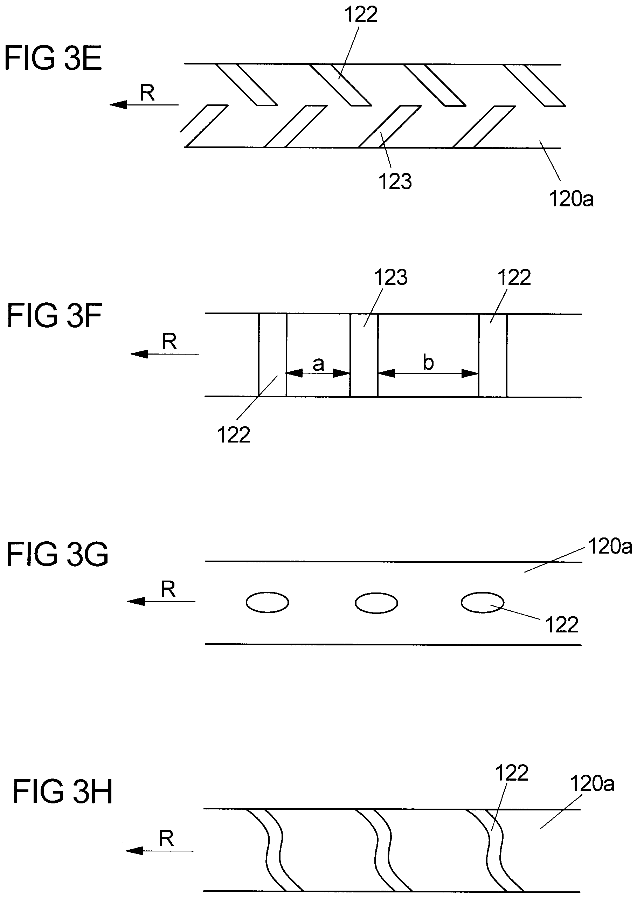

Bei der Ausführungsvariante der Figur 3E sind zwei einander gegenüberliegende Reihen von jeweils schräg zur Längserstreckungsrichtung R verlaufenden Aussparungen 122 und 123 an der Führungsfläche 120a ausgebildet. Die Reihen der Aussparungen 122 und 123 sind seitlich innerhalb der Führung 120 vorgesehen und verlaufen hierbei jeweils schräg zur Längserstreckungsrichtung R nach innen respektive nach unten in der Seilführung 120.

Bei der Ausführungsvariante der Figur 3F sind jeweils quer zur Längserstreckungsrichtung R verlaufende, schlitzartige Aussparungen 122 an der Führungsfläche 120a ausgebildet, die zueinander unterschiedliche Abstände a und b aufweisen.

Bei der Ausführungsvariante der Figur 3G sind entlang der Längserstreckungsrichtung R mehrere Aussparungen 122 mit jeweils ellipsenförmigem Querschnitt hintereinander angeordnet.

Bei der Ausführungsvariante der Figur 3H weisen einzelne hintereinander angeordnete Aussparungen 122 jeweils einen S-förmigen Verlauf auf.

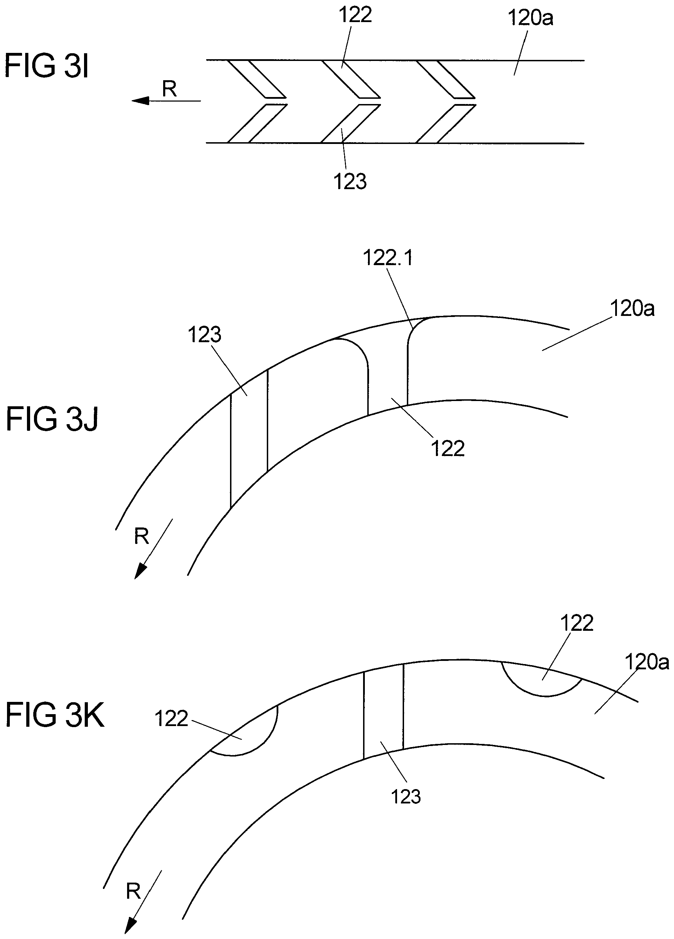

Bei der Ausführungsvariante der Figur 3I sind in Übereinstimmung mit der Ausführungsvariante der Figur 3E einander gegenüberliegende Reihen von Aussparungen 122 und 123 an der Führungsfläche 120a ausgebildet, wobei die jeweiligen Aussparungen 122 und 123 einer Reihe jeweils schräg zur Längserstreckungsrichtung R verlaufen. Im Unterschied zu der Ausführungsvariante der Figur 3E sind hierbei die Aussparungen 122 und 123 mittels eines 2-Komponenten-Spritzguss an dem (üblicherweise aus Kunststoff hergestellten) Grundkörper 12 ausgebildet.

Die Figuren 3J und 3K veranschaulichen ferner die Möglichkeit, Aussparungen 122 und 123 unterschiedlicher geometrischer Ausprägung miteinander an der für die Umlenkung des Seils 2 vorgesehenen Führungsfläche 120a des Mitnehmers 1 miteinander zu kombinieren. Hierbei sieht beispielsweise die Figur 3J eine Aussparung 122 mit einem sich trichterförmig aufweitenden Randabschnitt 122.1 vor. Zusätzlich ist eine Aussparung 122 entsprechend der Figuren 1, 2 oder 3F vorgesehen. Bei der Ausführungsvariante der Figur 3K sind wiederum ellipsenförmige Aussparungen 122 sowie längserstreckte und quer zur Längserstreckungsrichtung R verlaufende Aussparungen 123 miteinander kombiniert.

Anstelle oder zusätzlich zu Aussparungen 122, 123, die als Durchgangsöffnungen oder Durchgangslöcher an der Seilführung 120 ausgebildet sind, können selbstverständlich auch Aussparungen als Vertiefungen an der Führungsfläche 120a ausgebildet sein. Derartige Vertiefungen können insbesondere eine Durchgangsöffnung beranden. Derart können sich beispielsweise Partikel zunächst in der Vertiefung sammeln und dann - durch nachrückende Partikeln - über die Durchgangsöffnung vollständig aus der Führung 120 heraus gefördert werden.

Grundsätzlich sind die einzelnen Aussparungen 122 und 123 an denjenigen Bereichen der Führungsfläche 120a vorgesehen, an der im Betrieb des Fahrzeugfensterhebers F das Seil 2 anliegt. Das Seil 2 erstreckt sich somit über die jeweiligen Aussparungen 122 und 123 im Betrieb des Fahrzeugfensterhebers F hinweg und fördert damit durch seine Relativbewegung an dem Mitnehmer 1 Partikel aus der Seilführung 120 zu den Aussparungen 122, 123 und damit aus der Führung 120 heraus. Etwaige in der Seilführung 120 durch Abrieb oder Einwirkung von außen eingebrachte Partikel werden damit an definierten Aussparungen 122 und 123 aus der kanalartigen Seilführung 120 heraus geführt, sodass hierdurch keine störenden Reib- oder Schleifgeräusche verursacht werden.

### Bezugszeichenliste

- 1: Mitnehmer
- 10: Scheibenbefestigungsabschnitt
- 11: Führungsabschnitt
- 12: Grundkörper
- 120: Seilführung (Führung)
- 120a: Mantel- / Führungsfläche
- 122, 123: Aussparung
- 122.1, 122.2: Randabschnitt
- 122.3: Mittiger Abschnitt
- 2: Seil (Zugmittel)
- 20: Drahtlitzen
- 21: Zwischenraum
- A: Antriebseinheit
- a, b: Abstand
- F: Fahrzeugfensterheber
- FS1, FS2: Führungsschiene (Führung)
- R: Längserstreckungsrichtung
- S1 - S4: Seilrolle (Umlenkelement)

## Patentansprüche

1. Mitnehmer (1) für einen Fahrzeugfensterheber (F), der mit einer mittels des Fahrzeugfensterhebers (F) zu verstellenden Fensterscheibe zu verbinden ist und der eine Führung (120) für die Umlenkung eines Zugmittels (2) des Fahrzeugfensterhebers (F) aufweist, wobei die Führung (120) eine Führungsfläche (120a) ausbildet, an der bei bestimmungsgemäßer Montage des Fahrzeugfensterhebers (F) das Zugmittel (2) anliegt,
**dadurch gekennzeichnet, dass**
an der Führungsfläche (120a) mindestens eine Aussparung (122, 123) zum Abführen von Partikeln aus der für das Zugmittel (2) vorgesehenen Führung (120) des Mitnehmers (1) ausgebildet ist.

2. Mitnehmer nach Anspruch 1, **dadurch gekennzeichnet, dass** die mindestens eine Aussparung (122, 123) eine Vertiefung in der Führungsfläche (120a) ausbildet.

3. Mitnehmer nach Anspruch 1 oder 2, **dadurch gekennzeichnet, dass** die mindestens eine Aussparung (122, 123) eine Durchgangsöffnung ausbildet.

4. Mitnehmer nach einem der Ansprüche 1 bis 3, **dadurch gekennzeichnet, dass** die mindestens eine Aussparung (122, 123) längserstreckt ausgebildet ist.

5. Mitnehmer nach Anspruch 4, **dadurch gekennzeichnet, dass** eine Längsachse der mindestens einen Aussparung (122, 123) parallel, schräg oder quer zu einer Längserstreckungsrichtung (R) der Führung (120) verläuft.

6. Mitnehmer nach einem der Ansprüche 1 bis 3, **dadurch gekennzeichnet, dass** die mindestens eine Aussparung (122, 123) einen kreisförmigen oder ellipsenförmigen Querschnitt aufweist.

7. Mitnehmer nach einem der Ansprüche 1 bis 3, **dadurch gekennzeichnet, dass** die mindestens eine Aussparung (122) einen ersten Abschnitt (122.3) und mindestens einen zweiten Abschnitt (122.1, 122.2) aufweist, wobei sich der mindestens eine zweite Abschnitt (122.1, 122.2) an den ersten Abschnitt (122.3) in einer Richtung anschließt und sich entlang dieser Richtung aufweitet.

8. Mitnehmer nach einem der Ansprüche 1 bis 4 oder dem Anspruch 7, **dadurch gekennzeichnet, dass** die mindestens eine Aussparung (122, 123) S-förmig an der Führungsfläche (120a) verläuft.

9. Mitnehmer nach einem der vorhergehenden Ansprüche, **dadurch gekennzeichnet, dass** mehrere entlang einer Längserstreckungsrichtung (R) der Führung (120) aufeinanderfolgende Aussparungen (122, 123) an der Führungsfläche (120a) ausgebildet sind.

10. Mitnehmer nach Anspruch 9, **dadurch gekennzeichnet, dass** mindestens zwei der mehreren entlang der Längserstreckungsrichtung (R) der Führung (120) aufeinanderfolgenden Aussparungen (122, 123) zueinander verschiedene Querschnittsformen aufweisen.

11. Mitnehmer nach Anspruch 9 oder 10, **dadurch gekennzeichnet, dass** die mehreren entlang der Längserstreckungsrichtung (R) der Führung (120) aufeinanderfolgenden Aussparungen (122, 123) äquidistant zueinander beabstandet sind.

12. Mitnehmer nach Anspruch 9 oder 10, **dadurch gekennzeichnet, dass** entlang der Längserstreckungsrichtung (R) der Führung (120) aufeinanderfolgende Aussparungen (122, 123) mit zueinander unterschiedlichen Abständen (a, b) vorgesehen sind.

13. Mitnehmer nach einem der Ansprüche 9 bis 12, **dadurch gekennzeichnet, dass** mindestens zwei der mehreren entlang der Längserstreckungsrichtung (R) der Führung (120) aufeinanderfolgenden Aussparungen (122, 123) quer zur Längserstreckungsrichtung (R) zueinander versetzt sind.

14. Fahrzeugfensterheber für die Verstellung einer Fensterscheibe, mit einem flexiblen Zugmittel (2) für die Übertragung einer Verstellkraft zur Verstellung der Fensterscheibe, mindestens einem mit der Fensterscheibe zu verbindenden Mitnehmer (1) nach einem der Ansprüche 1 bis 13 und mindestens einer Führungsschiene (FS1, FS2), an der der mindestens eine Mitnehmer (1) verschieblich geführt ist, wobei der Mitnehmer (1) eine Führung (120) für die Umlenkung des flexiblen Zugmittels (2) an dem Mitnehmer (2) aufweist und die Führung (120) eine Führungsfläche (120a) ausbildet, an der das flexible Zugmittel (2) anliegt,
**dadurch gekennzeichnet, dass**
an der Führungsfläche (120a) mindestens eine Aussparung (122, 123) zum Abführen von Partikeln aus der für das flexible Zugmittel (2) vorgesehenen Führung (120) des Mitnehmers (1) ausgebildet ist.

## Claims

1. A carrier (1) for a vehicle window lifter (F) that is to be connected to a window pane to be adjusted by means of the vehicle window lifter (F) and that includes a guide (120) for the deflection of a traction means (2) of the vehicle window lifter (F), wherein the guide (120) forms a guide surface (120a) against which the traction means (2) rests when the vehicle window lifter (F) is properly mounted,
**characterized in that**
on the guide surface (120a) at least one cutout (122, 123) is formed for discharging particles from the guide (120) of the carrier (1) provided for the traction means (2).

2. The carrier according to claim 1, **characterized in that** the at least one cutout (122, 123) forms a depression in the guide surface (120a).

3. The carrier according to claim 1 or 2, **characterized in that** the at least one cutout (122, 123) forms a through opening.

4. The carrier according to any one of claims 1 to 3, **characterized in that** the at least one cutout (122, 123) is configured to be longitudinally extended.

5. The carrier according to claim 4, **characterized in that** a longitudinal axis of the at least one cutout (122, 123) extends parallel, obliquely or transversely to a direction of longitudinal extension (R) of the guide (120).

6. The carrier according to any one of claims 1 to 3, **characterized in that** the at least one cutout (122, 123) has a circular or elliptical cross-section.

7. The carrier according to any one of claims 1 to 3, **characterized in that** the at least one cutout (122) includes a first portion (122.3) and at least one second portion (122.1, 122.2), wherein the at least one second portion (122.1, 122.2) adjoins the first portion (122.3) in one direction and flares along this direction.

8. The carrier according to any one of claims 1 to 4 or claim 7, **characterized in that** the at least one cutout (122, 123) extends in an S-shape along the guide surface (120a).

9. The carrier according to any one of the preceding claims, **characterized in that** a plurality of cutouts (122, 123) succeeding each other along a direction of longitudinal extension (R) of the guide (120) are formed on the guide surface (120a).

10. The carrier according to claim 9, **characterized in that** at least two of the plurality of cutouts (122, 123) succeeding each other along the direction of longitudinal extension (R) of the guide (120) have mutually different cross-sectional shapes.

11. The carrier according to claim 9 or 10, **characterized in that** the plurality of cutouts (122, 123) succeeding each other along the direction of longitudinal extension (R) of the guide (120) are equidistantly spaced from each other.

12. The carrier according to claim 9 or 10, **characterized in that** cutouts (122, 123) succeeding each other along the direction of longitudinal extension (R) of the guide (120) are provided with mutually different spacings (a, b).

13. The carrier according to any one of claims 9 to 12, **characterized in that** at least two of the plurality of cutouts (122, 123) succeeding each other along the direction of longitudinal extension (R) of the guide (120) are offset from each other transversely to the direction of longitudinal extension (R).

14. A vehicle window lifter for the adjustment of a window pane, comprising a flexible traction means (2) for the transmission of an adjusting force for the adjustment of the window pane, at least one carrier (1) according to any one of claims 9 to 13 to be connected to the window pane, and at least one guide rail (FS1, FS2) on which the at least one carrier (1) is shiftably guided, wherein the carrier (1) includes a guide (120) for the deflection of the flexible traction means (2) on the carrier (2) and the guide (120) forms a guide surface (120a) against which the flexible traction means (2) rests,
**characterized in that**
on the guide surface (120a) at least one cutout (122, 123) is formed for discharging particles from the guide (120) of the carrier (1) provided for the flexible traction means (2).

## Revendications

1. Entraîneur (1) pour un lève-glace de véhicule (F) qui est à relier à une vitre à régler au moyen du lève-glace de véhicule (F) et qui présente un guidage (120) pour la déviation d'un moyen tracteur (2) du lève-glace de véhicule (F), dans lequel le guidage (120) réalise une surface de guidage (120a), contre laquelle le moyen tracteur (2) repose en cas de montage conforme du lève-glace de véhicule (F),
**caractérisé en ce que**
au moins un évidement (122, 123) est réalisé au niveau de la surface de guidage (120a) pour l'évacuation de particules hors du guidage (120) prévu pour le moyen tracteur (2) de l'entraîneur (1).

2. Entraîneur selon la revendication 1, **caractérisé en ce que** l'au moins un évidement (122, 123) réalise une cavité dans la surface de guidage (120a).

3. Entraîneur selon la revendication 1 ou 2, **caractérisé en ce que** l'au moins un évidement (122, 123) réalise une ouverture de passage.

4. Entraîneur selon l'une des revendications 1 à 3, **caractérisé en ce que** l'au moins un évidement (122, 123) est réalisé de manière étendue longitudinalement.

5. Entraîneur selon la revendication 4, **caractérisé en ce qu'**un axe longitudinal de l'au moins un évidement (122, 123) s'étend de manière parallèle, oblique ou transversale par rapport à un sens d'étendue longitudinale (R) du guidage (120).

6. Entraîneur selon l'une des revendications 1 à 3, **caractérisé en ce que** l'au moins un évidement (122, 123) présente une section transversale circulaire ou en forme d'ellipse.

7. Entraîneur selon l'une des revendications 1 à 3, **caractérisé en ce que** l'au moins un évidement (122) présente une première section (122.3) et au moins une deuxième section (122.1, 122.2), dans lequel l'au moins une deuxième section (122.1, 122.2) est contiguë à la première section (122.3) dans un sens et s'élargit le long de ce sens.

8. Entraîneur selon l'une des revendications 1 à 4 ou la revendication 7,
**caractérisé en ce que** l'au moins un évidement (122, 123) s'étend en forme de S au niveau de la surface de guidage (120a).

9. Entraîneur selon l'une des revendications précédentes, **caractérisé en ce que** plusieurs évidements (122, 123) se suivant le long d'un sens d'étendue longitudinale (R) du guidage (120) sont réalisés au niveau de la surface de guidage (120a).

10. Entraîneur selon la revendication 9, **caractérisé en ce qu'**au moins deux des plusieurs évidements (122, 123) se suivant le long du sens d'étendue longitudinale (R) du guidage (120) présentent des formes de section transversale différentes l'une de l'autre.

11. Entraîneur selon la revendication 9 ou 10, **caractérisé en ce que** les plusieurs évidements (122, 123) se suivant le long du sens d'étendue longitudinale (R) du guidage (120) sont espacés de manière équidistante les uns par rapport aux autres.

12. Entraîneur selon la revendication 9 ou 10, **caractérisé en ce que** des évidements (122, 123) se suivant le long du sens d'étendue longitudinale (R) du guidage (120) sont prévus avec des distances (a, b) différentes l'une de l'autre.

13. Entraîneur selon l'une des revendications 9 à 12, **caractérisé en ce qu'**au moins deux des plusieurs évidements (122, 123) se suivant le long du sens d'étendue longitudinale (R) du guidage (120) sont décalés transversalement au sens d'étendue longitudinale (R) les uns par rapport aux autres.

14. Lève-glace de véhicule pour le réglage d'une vitre, avec un moyen tracteur (2) flexible pour la transmission d'une force de réglage pour le réglage de la vitre, au moins un entraîneur (1) à relier à la vitre selon l'une des revendications 1 à 13 et au moins un rail de guidage (FS1, FS2) au niveau duquel l'au moins un entraîneur (1) est guidé de manière mobile, dans lequel l'entraîneur (1) présente un guidage (120) pour la déviation du moyen tracteur (2) flexible au niveau de l'entraîneur (2) et le guidage (120) réalise une surface de guidage (120a) contre laquelle le moyen tracteur (2) flexible repose,
**caractérisé en ce que**
au moins un évidement (122, 123) est réalisé pour l'évacuation de particules hors du guidage (120) prévu pour le moyen tracteur (2) flexible de l'entraîneur (1) au niveau de la surface de guidage (120a).
